# EUROPÄISCHE PATENTANMELDUNG

(11) **EP 1 138 375 A1**
(43) Veröffentlichungstag der Anmeldung: **04.10.2001**
(21) Anmeldenummer: 01103538.3
(22) Anmeldetag: 16.02.2001
(51) Int. Cl.: B01F 17/00, C07F 9/10, B01F 17/14, B01F 17/22

(54) **Emulgator, Verfahren zu seiner Herstellung und Verwendung**

(30) Priorität: 27.03.2000 DE 10015161
(71) Anmelder: Schill + Seilacher Aktiengesellschaft, 71032 Böblingen (DE)
(72) Erfinder: Sagala, Jozef, 71032 Böblingen (DE); Matschkal, Heinz-Peter, 73252 Lenningen-Hochwang (DE); Nagel, Siegfried, 71088 Holzgerlingen (DE); Saddington, Michael, 72218 Wildberg (DE)
(74) Vertreter: Bunke, Holger, Dr.rer.nat. Dipl.-Chem.

(57) **Zusammenfassung**

Es wird ein Emulgator mit verbesserter Emulgierwirkung und verringerter Peroxidzahl vorgeschlagen, der aus Lecithinen durch Zugabe eines Peroxids und gleichzeitige oder darauf folgende Zugabe eines Carbonsäureanhydrids erhältlich ist, eine POZ von weniger als 20 und eine mittlere Teilchengröße von 0,4 bis 6,0 µm besitzt, wobei 50% der Teilchen eine Teilchengröße von weniger als 4 µm aufweisen. Das Verfahren zur Herstellung des Emulgators ist durch die Reihenfolge der Zugabe der Reaktanten gekennzeichnet. Der Emulgator wird verwendet zur Herstellung von Leder-, Papier- und Textilhilfsmitteln, kosmetischen Präparaten, Lebens- und Arzneimitteln, Farben und Pigmentzubereitungen.

## Beschreibung

Die Erfindung betrifft einen Emulgator für wäßrige Emulsionen, der aus technischen Lecithinen, die ganz oder teilweise entfettet wurden, erhältlich ist, ein Verfahren zu seiner Herstellung und seine Verwendung.

Als Lecithin bezeichnet man den Extrakt, der aus dem getrockneten pflanzlichen Zellgewebe mit Hilfe von organischen Lösungsmitteln erhalten worden ist und der zusammengesetzt ist aus Phosphatiden, Fetten und Ölen. Der Begriff technische Lecithine umfaßt vorwiegend sowohl die handelsüblichen Pflanzenlecithine als auch die lecithinhaltigen Vorprodukte wie z.B. Lecithinschlämme (wet gum) oder halb/vollentfettete native Lecithine. Technische Lecithine enthalten immer auch einen gewissen Anteil an Kephalinen. Wenn im folgenden von Lecithinen gesprochen wird, sind immer technische Lecithine gemeint.

Phosphatide sind infolge ihres amphiphilen Charakters ausgezeichnete Hilfsmittel zur Bildung und Stabilisierung von Emulsionen und Dispersionen. Ihre Grenzflächenaktivität eröffnet den Pflanzenlecithinen zahlreiche Anwendungsmöglichkeiten bei der Herstellung von Lebens- und Futtermitteln, sowie von technischen und pharmazeutischen Präparaten. Allerdings sind die nativen, chemisch nicht-modifizierten Lecithine weniger brauchbar, da sie sich schlechter als modifizierte in Wasser lösen, chemisch instabil, insbesondere oxidationsempfindlicher sind, sich bei höheren Temperaturen leicht zersetzen und wegen ihrer relativ groben Micellen eine zu geringe Emulgierkraft aufweisen.

Um die chemische Stabilität und die Emulgierwirkung der technischen Lecithine zu verbessern, wurde deshalb schon im US-Patent 2 629 662 vorgeschlagen, die Doppelbindungen der ungesättigten Fettsäurereste mit Wasserstoffperoxid in Gegenwart einer wasserlöslichen aliphatischen Carbonsäure oder direkt mit einer Persäure, z.B. Peressigsäure, zu hydroxylieren. Da es sich bei dieser Reaktion um eine elektrophile Addition von H₂O₂ bzw. der entsprechenden Persäure an olefinische Doppelbindungen handelt, ist die Zugabe einer starken Protonensäure erforderlich, um die Reaktion in die gewünschte Richtung zu lenken. Die mit diesem Verfahren hergestellten modifizierten Lecithine sind zwar bessere Emulgatoren als die nativen Lecithine, aber ihre Dispergierbarkeit und ihre chemische Beständigkeit lassen immer noch zu wünschen übrig, sofern nicht sehr stark hydroxyliert wird - wodurch wiederum die Peroxidzahl extrem ansteigt, ganz abgesehen davon, daß das Verfahren durch den erforderlichen hohen Peroxid-Einsatz unökonomisch wird.

Deshalb wurde im US-Patent 3 301 881 vorgeschlagen, die freien Aminogruppen der Phosphatidreste durch Umsetzung mit einem Anhydrid einer organischen Säure, beispielsweise mit Essigsäureanhydrid, zu acylieren. Um dabei eine Verdunkelung der Farbe der Lecithine zu vermeiden, wurde gleichzeitig vorgeschlagen, die Phosphatide vor, während oder nach der Acylierung durch Zugabe eines Oxidationsmittels wie z.B. Wasserstoffperoxid oder Benzoylperoxid zu bleichen. Es hat sich jedoch gezeigt, daß die dabei entstehenden gebleichten und acylierten Lecithinderivate ebenfalls keine ausreichende Dispergierwirkung und keine ausreichende chemische Beständigkeit aufwiesen.

Schließlich wurde im US-Patent 3 962 292 vorgeschlagen, die aus dem US-Patent 2 629 262 bekannte Hydroxylierung mit der aus dem US-Patent 3 301 881 bekannten Acylierung zu kombinieren, wobei jedoch die Aminogruppen der Phosphatidreste zuerst acyliert und erst danach die Doppelbindungen der ungesättigten Fettsäurereste - unter Ausnutzung des für die elektrophile Addition von Wasserstoffperoxid erforderlichen sauren Mediums der Acylierung - hydroxyliert werden. Zweck dieser Vorgehensweise war es, den negativen Einfluß der freien Aminogruppen auf den Verlauf der Hydroxylierung durch vorausgehende Acylierung zu verringern. Die damit erhältlichen modifizierten Lecithine weisen jedoch immer noch sehr hohe Peroxidzahlen auf (POZ > 100), was den Anwendungsbereich dieser Produkte als Emulgatoren stark einschränkt.

Der Erfindung liegt deshalb die Aufgabe zugrunde, einen aus handelsüblichen technischen Lecithinen erhältlichen Emulgator für wäßrige Emulsionen bereitzustellen, der durch geeignete chemische Modifizierung eine verbesserte Dispergierwirkung und gleichzeit eine verbesserte chemische Beständigkeit, insbesondere gegenüber Oxidationsmitteln, auch bei erhöhter Temperatur sowie eine niedrige Peroxidzahl aufweist. Aufgabe der Erfindung ist außerdem die Bereitstellung eines Verfahrens zur Herstellung eines derartig verbesserten Emulgators und das Aufzeigen besonders nützlicher Anwendungsfelder für den neuen und verbesserten Emulgator.

Diese Aufgabe wird erfindungsgemäß durch einen Emulgator für wäßrige Emulsionen gelöst, der erhältlich ist aus technischen Lecithinen, die ganz oder teilweise entfettet wurden, durch Zugabe eines Peroxids und eines Carbonsäureanhydrids in einer ganz bestimmten Reihenfolge, nämlich durch Zugabe des Peroxids und gleichzeitige oder darauffolgende, niemals aber vorausgehende, Zugabe des Carbonsäureanhydrids. Der erfindungsgemäße Emulgator ist gekennzeichnet durch eine Peroxidzahl (POZ) von weniger als 20 und durch eine mittlere Teilchengröße (Dₘᵥ), gemessen in 10%iger wäßriger Emulsion bei einem pH-Wert zwischen 4 und 6, von 0,4 bis 6 µm, wobei 50% der Teilchen eine Teilchengröße (D₅₀) von weniger als 4 µm besitzen.

Angesichts des zitierten Standes der Technik war es für den Fachmann völlig überraschend, daß man ausgehend von den technischen kephalinhaltigen Lecithinen eine Herabsetzung der POZ auf weniger als 20 in kurzer Zeit bei fast quantitativer Umsetzung zu sehr gut selbstemulgierenden Produkten erzielen kann, wenn man die Zugabe des Peroxids und des Carbonsäureanhydrids in der angegebenen Reihenfolge durchführt.

Die POZ des erfindungsgemäßen Emulgators beträgt vorzugsweise weniger als 10, nach einem Zeitraum von 12 Stunden nach seiner Herstellung bestimmt.

Das erfindungsgemäße Verfahren zur Herstellung des Emulgators aus kephalinhaltigen technischen Lecithinen, die ganz oder teilweise entfettet wurden, ist dadurch gekennzeichnet, daß den als Ausgangsmaterial verwendeten Lecithinen zum Zwecke der Hydroxylierung und Acylierung ein Peroxid und ein Carbonsäureanhydrid zugegeben werden, wobei die Zugabe des Carbonsäureanhydrids gleichzeitig mit oder unmittelbar nach der Zugabe des Peroxids erfolgt.

Das erfindungsgemäße Verfahren benötigt nur geringe Mengen an Peroxid, vorzugsweise Wasserstoffperoxid in handelsüblicher Konzentration, z.B. in 30%iger wäßriger Lösung, oder Benzoylperoxid. Das Peroxid wird vorzugsweise in einer Menge von 1,5 bis 5 Gew.-% , besonders bevorzugt 1,5 bis 3 Gew.-%, bezogen auf das Trockengewicht des eingesetzten Lecithin-Ausgangsmaterials, verwendet.

Als Carbonsäureanhydrid wird für die Acylierung vorzugsweise Acetanhydrid, Propionsäureanhydrid oder Buttersäureanhydrid verwendet, und zwar vorzugsweise in einer Menge von 2 bis 7 Gew.-%, besonders bevorzugt 2 bis 4 Gew.-%, bezogen auf das Trockengewicht des eingesetzten Lecithin-Ausgangsmaterials.

Weil die Umsetzung nahezu quantitativ verläuft, also praktisch keine Nebenprodukte entstehen, ist das erfindungsgemäße Verfahren auch äußerst umweltfreundlich und kostengünstig, zumal auch keine Entsorgungsprobleme entstehen.

Sowohl die Hydroxylierung als auch die Acylierung werden erfindungsgemäß bei Temperaturen zwischen 40 und 75°C durchgeführt, besonders vorteilhaft zwischen 55 und 65°C. Diese Temperaturen werden durch Erhitzen des Ausgangsmaterials auf etwa 50 bis 55°C und die auftretende Reaktionswärme erreicht, wobei vorzugsweise gekühlt wird, sobald die Reaktionstemperatur 65°C überschreitet.

Die überraschend gute Dispergierwirkung des erfindungsgemäßen Emulgators wird u.a. der mittleren Teilchengröße von zwischen 0,4 und 6,0 µm, wobei 50 % der Teilchen eine Teilchengröße von weniger als 4 µm besitzen, zugeschrieben, obwohl die genauen Wirkungsmechanismen insoweit noch nicht erforscht sind.

Ein großer Vorteil des erfindungsgemäßen Emulgators ist die niedrige Peroxidzahl, insbesondere bei Verwendung des Emulgators zur Herstellung von Leder-, Papier- und Textilhilfsmitteln und bei der Herstellung von Leder, Papier, Textilfasern und Textilien, und zwar deshalb, weil bei einer zu hohen Peroxidzahl oxidationsempfindliche Konservierungsmittel und Antioxidantien sofort vom Emulgator zerstört werden würden.

Der erfindungsgemäße Emulgator wird deshalb vorzugsweise zur Herstellung von Leder-, Papier- und Textilhilfsmitteln, kosmetischen Präparaten, Lebens- und Arzneimitteln, Farben, Anstrichmitteln, Pigmentzubereitungen sowie bei der Herstellung von Leder, Papier, Textilfasern und Textilien verwendet, wobei auch eine Verwendung als Coemulgator neben einem oder mehreren anderen hydrophilen oder lipophilen Stoffen und/oder Emulgatoren mit Vorteil möglich ist.

Der erfindungsgemäße Emulgator ist somit auch besonders interessant für solche Produkte, die oxidationsempfindlich sind und gegen Oxidation durch Zugabe von Antioxidantien besonders geschützt werden müssen, wie z.B. vegetabil gegerbte Leder.

Wegen ihrer kleinen Micellen eignen sich die erfindungsgemäßen Emulgatoren auch zum Einsatz beim Bleichen, Kochen und Beuchen in der Textilindustrie.

Die Erfindung wird nachfolgend anhand eines Beispiels näher erläutert.

### Beispiel

400 g technisches Lecithin mit einem Phospholipidgehalt von 65 % und einer Iodzahl von 86 werden auf 50 bis 55°C erwärmt und mit 8 g Wasserstoffperoxid (2 Gew-%, bezogen auf das Lecithingewicht) versetzt. Nach 20-minütigem Rühren werden 16 g Acetanhydrid (= 4 Gew.-%, bezogen auf das Lecithingewicht) kontinuierlich über einen Zeitraum von 60 Minuten zugegeben, wobei die Kühlung eingeschaltet wird, sobald die Temperatur des Reaktionsgemisches 65°C überschreitet. Nach der Zugabe wird noch 2 Stunden lang gerührt; zu diesem Zeitpunkt wird eine Peroxidzahl von 18 gemessen. Das entstandene modifizierte Lecithinderivat zeigt 12 Stunden nach Beendigung der Reaktion folgende Eigenschaften:
1. Phospholipidgehalt (als Acetonunlösliches): 53 %
2. Iodzahl: 76
3. Peroxidzahl: 5,0
4. Partikelgröße Dₘᵥ = 2,8 µm; D₅₀ = 1,7 µm.

## Patentansprüche

1. Emulgator für wäßrige Emulsionen, erhältlich aus technischen, kephalinhaltigen Lecithinen, Lecithinschlämmen und/oder nativen Pflanzenlecithinen, die ganz oder teilweise entfettet wurden, durch Zugabe eines Peroxids und eines Carbonsäureanhydrids in einer ganz bestimmten Reihenfolge, nämlich durch Zugabe des Peroxids und gleichzeitige oder darauffolgende, niemals aber vorausgehende, Zugabe des Carbonsäureanhydrids, **gekennzeichnet durch** eine Peroxidzahl (POZ) von weniger als 20 und **durch** eine mittlere Teilchengröße (Dₘᵥ), gemessen in 10%iger wäßriger Emulsion bei einem pH-Wert zwischen 4 und 6 , von 0,4 bis 6 µm, wobei 50 % der Teilchen eine Teilchengröße (D₅₀) von weniger als 4 µm besitzen.

2. Emulgator nach Anspruch 1, **gekennzeichnet durch** eine POZ von weniger als 10, nach einem Zeitraum von 12 Stunden nach seiner Herstellung bestimmt.

3. Verfahren zur Herstellung des Emulgators nach Anspruch 1 oder 2, **dadurch gekennzeichnet, daß** technischen, kephalinhaltigen Lecithinen, Lecithinschlämmen und/oder nativen Pflanzenlecithinen, die ganz oder teilweise entfettet wurden, zum Zwecke der Hydroxylierung und Acylierung ein Peroxid und gleichzeitig oder danach ein Carbonsäureanhydrid zugegeben werden.

4. Verfahren nach Anspruch 3, **dadurch gekennzeichnet, daß** zur Hydroxylierung Wasserstoffperoxid in handelsüblicher Konzentration oder Benzoylperoxid verwendet werden.

5. Verfahren nach Anspruch 3 oder 4, **dadurch gekennzeichnet, daß** das Peroxid in einer Menge von 1,5 bis 5 Gew.-%, vorzugsweise 1,5 bis 3 Gew.-%, bezogen auf das Trockengewicht des eingesetzten Lecithin-Ausgangsmaterials, verwendet wird.

6. Verfahren nach einem der Ansprüche 3 bis 5, **dadurch gekennzeichnet, daß** die Acylierung mit Acetanhydrid, Propionsäureanhydrid oder Buttersäureanhydrid durchgeführt wird.

7. Verfahren nach einem der Ansprüche 3 bis 6, **dadurch gekennzeichnet, daß** das Carbonsäureanhydrid in einer Menge von 2 bis 7 Gew.-%, vorzugsweise 2 bis 4 Gew.-%, bezogen auf das Trockengewicht des eingesetzten Lecithin-Ausgangsmaterials, verwendet wird.

8. Verfahren nach einem der Ansprüche 3 bis 7, **dadurch gekennzeichnet, daß** die Hydroxylierung und die Acylierung bei Temperaturen zwischen 40 und 75°C, vorzugsweise 55 bis 65°C, durchgeführt werden.

9. Verwendung des Emulgators gemäß Anspruch 1 oder 2 und des gemäß einem der Ansprüche 3 bis 8 hergestellten Emulgators zur Herstellung von Leder-, Papier- und Textilhilfsmitteln, kosmetischen Präparaten, Lebens- und Arzneimitteln, Farben, Anstrichmitteln, Pigmentzubereitungen sowie bei der Herstellung von Leder, Papier, Textilfasern und Textilien.

10. Verwendung des Emulgators nach Anspruch 9 als Co-Emulgator neben einem oder mehreren anderen hydrophilen oder lipophilen Stoffen und/oder Emulgatoren.
